(19) Europäisches Patentamt
European Patent Office
Office européen des brevets

(11) **EP 2 141 656 A1**

(12) **DEMANDE DE BREVET EUROPEEN**

(43) Date de publication:
**06.01.2010 Bulletin 2010/01**

(51) Int Cl.:
*G06T 7/00* (2006.01)   *G06T 7/20* (2006.01)

(21) Numéro de dépôt: **09290480.4**

(22) Date de dépôt: **23.06.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **30.06.2008 FR 0854382**

(71) Demandeur: **Total Immersion 92150 Suresnes (FR)**

(72) Inventeurs:
• **Lefevre, Valentin 92800 Puteaux (FR)**

• **Livet, Nicolas 75011 Paris (FR)**
• **Pasquier, Thomas 33500 Libourne (FR)**

(74) Mandataire: **Imbert de Tremiolles, Ghislain Santarelli 14, avenue de la Grande Armée B.P. 237 75822 Paris Cedex 17 (FR)**

(54) **Procédé et dispositif permettant de détecter en temps réel des interactions entre un utilisateur et une scène de réalité augmentée**

(57)     L'invention a pour objet un système de détection en temps réel d'interactions entre un utilisateur et une scène de réalité augmentée, les interactions résultant de la modification de l'apparence d'un objet présent dans l'image. Après avoir créé (110) et traité (115) un modèle de référence dans une phase d'initialisation (100), la pose de l'objet dans l'image est déterminée (135) et un modèle de comparaison est extrait de l'image (160). Les modèles de référence et de comparaison sont comparés (170), en fonction de ladite pose déterminée de l'objet, et, en réponse à l'étape de comparaison, les interactions sont détectées.

Fig. 1

EP 2 141 656 A1

**Description**

La présente invention concerne la combinaison d'images réelles et virtuelles en temps réel, aussi appelée réalité augmentée, et plus particulièrement un procédé et un dispositif permettant une interaction entre une scène réelle et une scène virtuelle, c'est-à-dire permettant l'interaction d'un ou de plusieurs utilisateurs avec des objets d'une scène réelle, notamment dans le cadre d'applications de réalité augmentée, utilisant un système de suivi automatique, en temps réel, de ces objets, sans marqueur.

La réalité augmentée a pour objet d'insérer un ou plusieurs objets virtuels dans les images d'un flux vidéo. Selon le type d'application, la position et l'orientation de ces objets virtuels peuvent être déterminées par des données externes à la scène représentée par les images, par exemple des coordonnées issues directement d'un scénario de jeu, ou par des données liées à certains éléments de cette scène, par exemple des coordonnées d'un point particulier de la scène tel que la main d'un joueur. Lorsque la position et l'orientation sont déterminées par des données liées à certains éléments de cette scène, il peut être nécessaire de suivre ces éléments en fonction des mouvements de la caméra ou des mouvements de ces éléments eux-mêmes dans la scène. Les opérations de suivi d'éléments et d'incrustation d'objets virtuels dans les images réelles peuvent être exécutées par des calculateurs distincts ou par un même calculateur.

Il existe plusieurs méthodes de suivi d'éléments dans un flux d'images. Généralement, les algorithmes de suivi d'élément, aussi appelés algorithmes de poursuite de cible, utilisent un marqueur qui peut être visuel ou utiliser d'autres moyens tel que des moyens basés sur les radio fréquences ou l'infrarouge. Alternativement, certains algorithmes utilisent une reconnaissance de forme pour suivre un élément particulier dans un flux d'image.

L'objectif de ces algorithmes de suivi visuel, ou de suivi par capteur, est de retrouver, dans une scène réelle, la pose, c'est-à-dire la position et l'orientation, d'un objet dont l'information de géométrie est disponible, ou de retrouver les paramètres extrinsèques de position et d'orientation d'une caméra filmant cet objet, grâce à l'analyse d'image.

Le demandeur a développé un algorithme de suivi visuel d'objets n'utilisant pas de marqueur et dont l'originalité réside dans l'appariement de points particuliers entre l'image courante d'un flux vidéo et un ensemble d'images clés, obtenues automatiquement à l'initialisation du système.

Cependant, une limite généralement admise des systèmes de réalité augmentée est le manque d'interaction d'un utilisateur avec la scène réelle observée. Bien qu'il existe quelques solutions adaptées à mettre en oeuvre une telle interactivité, celles-ci sont basées sur des systèmes complexes.

Une première approche utilise des capteurs sensoriels associés, par exemple, aux articulations d'un utilisateur ou d'un acteur. Bien que cette approche soit le plus souvent dédiée aux applications de capture de mouvement, notamment pour les effets spéciaux cinématographiques, il est aussi possible de suivre la position et l'orientation dans l'espace d'un acteur, et, en particulier, de ses mains et de ses pieds pour lui permettre d'interagir avec une scène virtuelle. Cependant, l'utilisation de cette technique s'avère coûteuse, elle oblige l'insertion dans la scène de capteurs encombrants pouvant en outre subir des perturbations dans des environnements spécifiques.

Des approches multi caméras sont également mises en oeuvre, par exemple dans les projets européens « OCETRE » et « HOLONICS », afin d'obtenir une reconstruction en temps réel de l'environnement et des mouvements spatiaux des utilisateurs. Un exemple de telles approches est notamment décrit dans le document « Holographic and action capture techniques », T. Rodriguez, A. Cabo de Leon, B. Uzzan, N. Livet, E. Boyer, F. Geffray, T. Balogh, Z. Megyesi et A. Barsi, August 2007, SIGGRAPH '07, ACM SIGGRAPH 2007 emerging technologies. Il est à noter que ces applications peuvent permettre une restitution de la géométrie de la scène réelle mais ne permettent pas, à l'heure actuelle, de retrouver des mouvements précis. De plus, pour satisfaire les contraintes temps réel, il est nécessaire de mettre en place des architectures matérielles complexes et coûteuses.

Il existe également des écrans tactiles utilisés pour visualiser des scènes de réalité augmentée qui permettent de déterminer les interactions d'un utilisateur avec une application. Cependant, ces écrans sont coûteux et peu adaptés aux applications de réalité augmentée.

Dans le domaine des jeux vidéo, une image est tout d'abord capturée en provenance d'une caméra de type webcam reliée à un ordinateur ou à une console. Cette image est habituellement stockée dans la mémoire du système auquel la caméra est reliée. Ensuite, un algorithme de suivi d'objet, aussi appelé *blobs tracking* en terminologie anglo-saxonne, est utilisé pour calculer, en temps réel, les contours de certains éléments de l'utilisateur qui se déplace dans l'image grâce, notamment, à l'utilisation d'algorithmes de flot optiques. La position de ces formes dans l'image permet de modifier ou de déformer certaines parties de l'image affichée. Cette solution permet donc de localiser la perturbation d'une zone de l'image selon deux degrés de liberté.

Cependant, les limites de cette approche sont principalement le manque de précision car il n'est pas possible de maintenir l'exécution correcte du procédé lors d'un déplacement de la caméra et le manque de sémantique car il n'est pas possible de distinguer les mouvements entre l'avant et l'arrière plan. De plus, cette solution utilise l'analyse d'image par flot optiques ce qui ne permet pas, notamment, d'être robuste au changement d'éclairage ou encore au bruit.

Il existe également une approche mettant en oeuvre un système de suivi d'objet pour détecter une forme, par exemple la forme d'une main, au dessus d'un objet prédéterminé constitué d'une feuille planaire comprenant des formes géométriques simples. Cette approche est cependant limitée dans le sens où elle reste très peu robuste au bruit et aux changements d'éclairage et ne fonctionne qu'avec un objet bien déterminé contenant des motifs géométriques tels que de gros rectangles noirs. De plus, un stabilisateur doit être utilisé pour détecter les occlusions, ce qui ne permet pas de faire des mouvements importants de caméra pendant la détection.

Ces solutions n'offrent donc pas les performances et la simplicité d'utilisation requises pour de nombreuses applications. Il existe par conséquent un besoin d'améliorer la robustesse à l'éclairage, au bruit du flux vidéo et aux mouvements, applicable à des environnements réels ne comprenant pas de capteur ou de marqueur particulier, tout en proposant un système ayant un prix acceptable.

L'invention permet de résoudre au moins un des problèmes exposés précédemment.

L'invention a ainsi pour objet un procédé de détection en temps réel d'au moins une interaction entre un utilisateur et une scène de réalité augmentée dans au moins une image d'une séquence d'images, ladite au moins une interaction résultant de la modification de l'apparence de la représentation d'au moins un objet présent dans ladite au moins une image, ce procédé comprenant les étapes suivantes,

- dans une phase d'initialisation,

    o création d'au moins un modèle de référence associé audit au moins un objet ;
    o traitement dudit au moins un modèle de référence ;

- dans une phase d'utilisation

    o détermination de la pose dudit au moins un objet dans ladite au moins une image ;
    o extraction d'au moins un modèle de comparaison de ladite au moins une image selon ledit au moins un objet ; et,
    o comparaison dudit au moins un modèle de référence traité et dudit au moins un modèle de comparaison en fonction de ladite pose déterminée et détection de ladite au moins une interaction en réponse à ladite étape de comparaison.

Le procédé selon l'invention permet ainsi à un utilisateur d'interagir en temps réel avec une scène de réalité augmentée. Les objets utilisés pour détecter les interactions peuvent bouger ainsi que la source dont est issue la séquence d'images. Le procédé selon l'invention est robuste aux variations des paramètres des images traitées et peut être mis en oeuvre avec du matériel standard.

Ladite étape de détermination de la pose dudit au moins un objet dans ladite au moins une image met en oeuvre, de préférence, un algorithme de suivi d'objet.

Avantageusement, lesdites étapes de la phase d'utilisation sont répétées au moins une fois sur au moins une seconde image de ladite séquence d'images. Le procédé selon l'invention permet ainsi de détecter des interactions dans chaque image d'une séquence d'images, de façon continue.

Le procédé comprend en outre, de préférence, une étape de traitement récursif du résultat de ladite étape de comparaison pour améliorer la qualité et la robustesse de détection des interactions.

Selon un mode de réalisation particulier, ladite étape de traitement dudit au moins un modèle de référence comprend une étape de définition d'au moins une zone active dans ledit au moins un modèle de référence, ledit procédé comprenant en outre une étape de détermination de ladite au moins une zone active dans ledit modèle de comparaison durant ladite phase d'utilisation, ladite étape de comparaison étant basée sur lesdites zones actives. Le procédé selon l'invention permet ainsi d'analyser les variations de zones particulières des images et d'associer différentes actions selon ces zones.

Toujours selon un mode de réalisation particulier, le procédé comprend en outre la détermination d'au moins un point de référence dans ladite au moins une zone active dudit au moins un modèle de référence, ladite étape de comparaison comprenant une étape de localisation dudit au moins un point de référence dans ladite zone active dudit modèle de comparaison.

Toujours selon un mode de réalisation particulier, ladite étape de comparaison comprend une étape d'évaluation de la corrélation d'au moins une partie dudit au moins un modèle de référence traité et d'au moins une partie dudit au moins un modèle de comparaison. Alternativement, ladite étape de comparaison comprend une étape d'évaluation de la différence d'au moins une partie dudit au moins un modèle de référence traité avec au moins une partie dudit au moins un modèle de comparaison. Le procédé selon l'invention permet ainsi de comparer la variation de la représentation d'un objet entre une vue de référence et une vue courante afin de détecter une perturbation pouvant être associée à une commande d'interaction.

Toujours selon un mode de réalisation particulier, ladite étape de création dudit modèle de référence comprend une étape de transformation géométrique de type homographique d'une représentation dudit au moins un objet. Il est ainsi possible d'obtenir directement un modèle de référence à partir d'une représentation de l'objet et de sa pose.

Toujours selon un mode de réalisation particulier, ledit au moins un modèle de comparaison est déterminé selon ladite pose dudit au moins un objet, ladite étape d'extraction dudit modèle de comparaison comprenant une étape de transformation géométrique de type homographique d'au moins une partie de ladite au moins une image. Il est ainsi possible d'obtenir un modèle de comparaison à partir d'une représentation de l'objet et de sa pose, ce modèle de comparaison pouvant être comparé à un modèle de référence représentant l'objet selon une pose prédéterminée.

Toujours selon un mode de réalisation particulier, ladite étape de détermination dudit modèle de référence comprend une étape de détermination d'au moins un modèle gaussien représentatif de la distribution d'au moins un paramètre d'au moins un élément dudit modèle de référence. Le procédé selon l'invention permet ainsi de comparer la variation de la représentation d'un objet entre une vue de référence et une vue courante afin de détecter une perturbation pouvant être associée à une commande d'interaction. Le procédé selon l'invention est ainsi robuste aux perturbations, notamment aux variations de colorimétrie et d'éclairage.

De façon avantageuse, ladite étape de comparaison comprend une étape d'évaluation d'une mesure de distance entre au moins un point dudit modèle de comparaison correspondant audit au moins un point dudit modèle de référence et ledit modèle gaussien associé audit au moins un point dudit modèle de référence pour mesurer la similitude entre les représentations des modèles de référence et de comparaison.

Selon un mode de réalisation particulier, le procédé comprenant en outre une étape de détermination, durant ladite phase d'utilisation, d'une représentation dudit modèle de référence selon ladite pose dudit au moins un objet et selon ledit modèle de référence qui comprend un modèle géométrique tridimensionnel et une texture associée. Le procédé selon l'invention permet ainsi de comparer une partie de l'image courante à la représentation du modèle de référence, selon la pose de l'objet.

De façon avantageuse, le procédé comprend en outre une étape d'activation d'au moins une action en réponse à ladite détection de ladite au moins une interaction.

Selon un mode de réalisation particulier, ladite modification de l'apparence dudit au moins un objet résulte de la présence d'un objet, appelé second objet, distinct dudit au moins un objet, entre ledit au moins un objet et la source de ladite au moins une image.

Toujours selon un mode de réalisation particulier, ladite modification de l'apparence dudit au moins un objet résulte d'une modification dudit au moins un objet.

L'invention a également pour objet un programme d'ordinateur comprenant des instructions adaptées à la mise en oeuvre de chacune des étapes du procédé décrit précédemment ainsi qu'un dispositif comprenant des moyens adaptés à la mise en oeuvre de chacune des étapes du procédé décrit précédemment.

D'autres avantages, buts et caractéristiques de la présente invention ressortent de la description détaillée qui suit, faite à titre d'exemple non limitatif, au regard des dessins annexés dans lesquels :

- la figure 1 représente schématiquement le procédé selon l'invention ;
- la figure 2 illustre schématiquement un premier mode de réalisation du précédé selon l'invention, utilisant des zones actives de l'objet à suivre ;
- la figure 3 illustre un exemple de détermination d'un modèle de référence ou de comparaison à partir d'une image comprenant l'objet associé à ce modèle de référence ou de comparaison ;
- la figure 4 illustre un exemple de modèle de référence comprenant un objet tridimensionnel et une texture associée ;
- la figure 5 présente un exemple de modèle de référence d'un objet géométrique, le modèle de référence comprenant un ensemble de zones actives ;
- la figure 6, comprenant les figures 6a, 6b et 6c, illustre un exemple de détermination d'une représentation d'un modèle de référence ;
- la figure 7, comprenant les figures 7a et 7b, illustre un exemple de comparaison d'une zone active d'une représentation d'un modèle de référence à celle d'un modèle de comparaison permettant de déterminer si la zone active est perturbée ;
- la figure 8 illustre schématiquement un second mode de réalisation du précédé selon l'invention, n'utilisant pas de zone active de l'objet à suivre ;
- la figure 9 illustre un exemple d'utilisation de l'invention selon lequel une interaction est détectée par la modification d'un objet ; et,
- la figure 10 montre un exemple d'appareil permettant d'implémenter au moins partiellement l'invention.

L'invention combine des algorithmes de suivi d'objets géométriques et d'analyse d'images pour permettre de détecter en temps réel des interactions entre un utilisateur et une scène de réalité augmentée. Le système est robuste aux déplacements de caméras, aux déplacements d'objets dans la scène ainsi qu'aux changements d'éclairage.

De façon simplifiée, le système selon l'invention vise à suivre un ou plusieurs objets dans une séquence d'images afin de déterminer, pour chaque image, la pose des objets. La pose réelle des objets est ensuite utilisée pour obtenir une représentation de ces objets selon une pose prédéterminée, par projection d'une partie de l'image. Cette représentation est réalisée à partir de l'image et d'un modèle prédéterminé. La comparaison de ces représentations et des modèles permet de déterminer les parties masquées de ces objets, ces parties masquées pouvant être utilisées pour détecter des interactions entre un utilisateur et une scène de réalité augmentée.

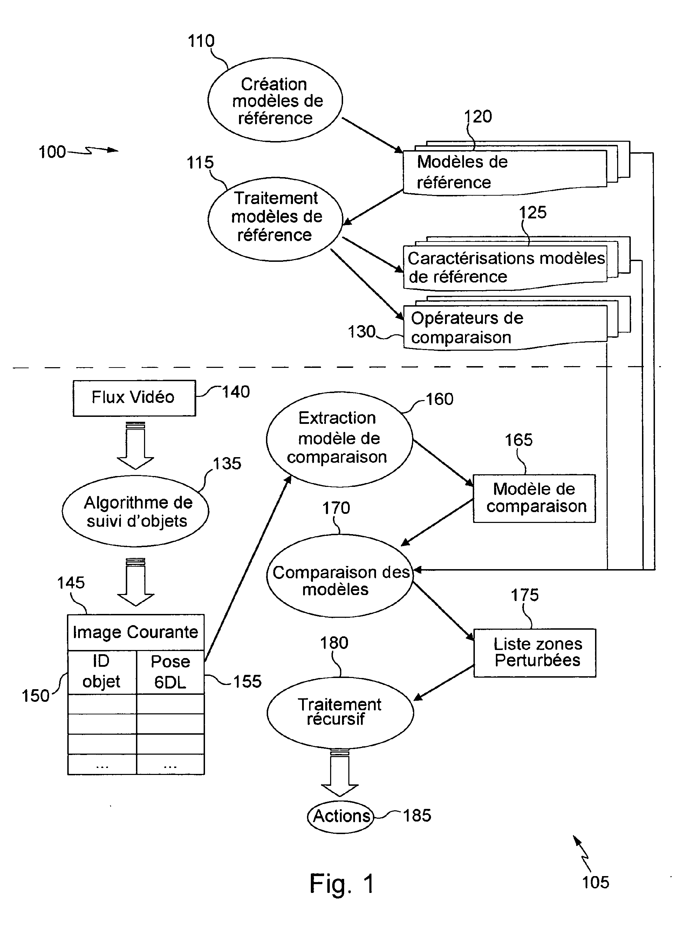

La figure 1 illustre schématiquement le procédé selon l'invention. Comme illustré, celui-ci comprend deux parties.

Une première partie, référencée 100, correspond à la phase d'initialisation. Dans cette phase, les traitements sont effectués hors ligne, c'est-à-dire avant la mise en oeuvre de la détection en temps réel, dans une séquence d'images, d'interactions entre un utilisateur et une scène de réalité augmentée.

Une seconde partie, référencée 105, correspond aux traitements effectués en ligne pour permettre la détection en temps réel, dans une séquence d'images, d'interactions entre un utilisateur et une scène de réalité augmentée.

La phase d'initialisation ne nécessite pas l'utilisation d'un algorithme de suivi d'objet. Cette phase comprend essentiellement deux étapes, référencées 110 et 115, qui ont pour objet la création et le traitement, respectivement, de modèles de référence 120.

Les modèles de référence contiennent ici une géométrie des objets à partir desquels des interactions doivent être détectées ainsi que la texture de ces objets. Dans le cas général, il s'agit d'un maillage générique tridimensionnel (3D) auquel est associé une image dépliée appelée déroulé ou *UV map* en terminologie anglo-saxonne. Pour des objets plans, une simple image est suffisante. Au moins un modèle de référence doit être déterminé pour chaque objet à partir desquels des interactions doivent être détectées.

L'étape de création des modèles de référence 120 (étape 110) consiste par exemple à construire ces modèles à partir d'un logiciel de création 2D/3D standard. La texture de ces modèles de référence est de préférence construite à partir d'une image extraite de la séquence d'images afin de correspondre au mieux au signal issu du capteur vidéo.

Plusieurs types de traitements peuvent être appliqués sur les modèles de référence (étape 115) pour rendre la détection des interactions plus robuste.

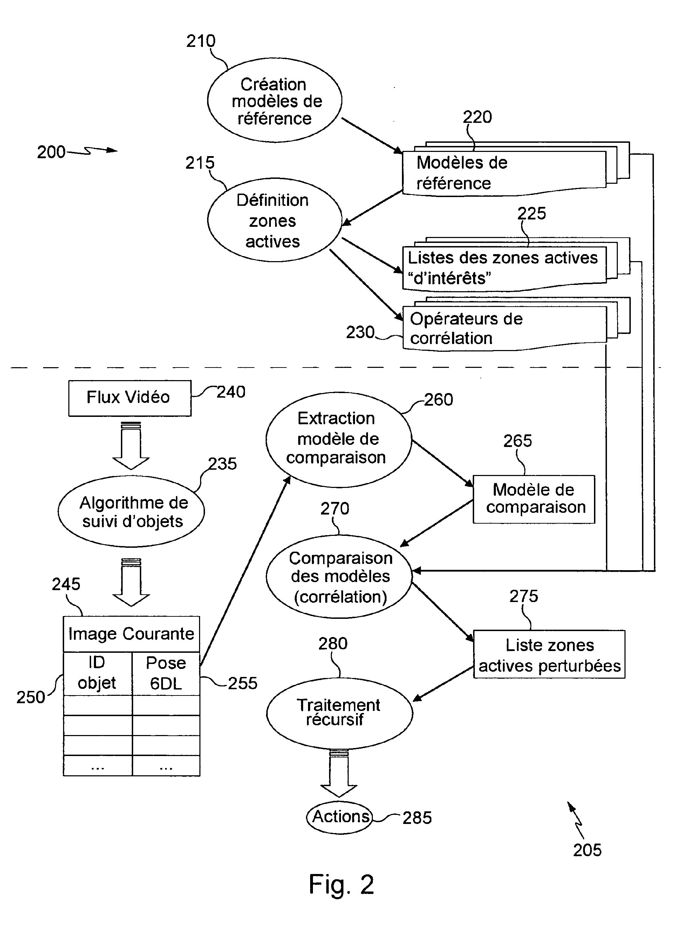

Un premier traitement consiste par exemple à définir, sur les modèles de référence, des zones actives représentant un intérêt visuel. Ces zones peuvent être déterminées directement sur le modèle générique 3D ou sur une projection bidimensionnelle (2D) de ce modèle, en particulier au moyen d'une IHM (sigle d'Interface Homme-Machine). Une zone active peut notamment contenir une forme géométrique 2D ou 3D, une identification et un seuil de détection. Un tel exemple est décrit en référence à l'étape 215 de la figure 2.

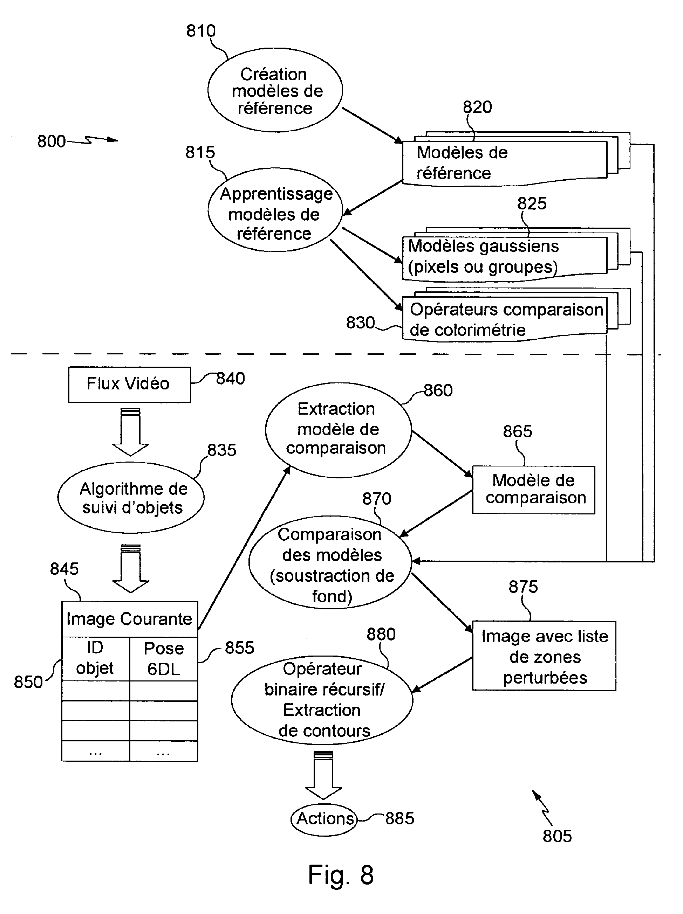

Un autre traitement consiste par exemple à simuler des perturbations sur le modèle afin de mieux prendre en compte les variations d'éclairage, les ombrages et les bruits qui peuvent intervenir pendant la phase de détection en temps réel des interactions. Un tel exemple est décrit en référence à l'étape 815 de la figure 8.

De tels traitements permettent d'obtenir les caractéristiques 125 des modèles de référence.

Lors de cette étape de traitement, l'opérateur de comparaison 130 qui sera utilisé par la suite pour détecter les interactions est de préférence déterminé.

La phase de détection en temps réel des interactions (105) nécessite ici la mise en oeuvre d'un algorithme de suivi d'objets (étape 135). Un tel algorithme permet de suivre des objets dans une séquence d'images, c'est-à-dire par exemple dans un flux vidéo 140, à partir d'informations de texture et de géométries.

Ce type d'algorithme permet de déterminer pour chaque image, en particulier pour l'image courante 145, une liste d'identifiants 150 des objets présent dans l'image et des poses 155 de ces objets selon six degrés de liberté (6DL) correspondant à leurs position et orientation. Un algorithme standard de suivi d'objet est ici utilisé.

Une deuxième étape de la phase de détection a pour objet l'extraction du modèle de comparaison, dans l'image courante 145, pour chaque objet géométrique suivi dans la séquence d'images (étape 160). Cette étape consiste notamment à extraire l'objet de l'image selon la localisation de l'objet obtenue par l'algorithme de suivi et à appliquer à l'objet une transformation linéaire afin de le représenter dans le repère associé au modèle de référence.

Lorsque le modèle de référence comprend un modèle générique 3D, cette deuxième étape comprend en outre la détermination d'une projection du modèle de référence à partir de la position et de l'orientation du modèle 3D courant, déterminé par l'algorithme de suivi d'objets et de sa texture dépliée.

Le modèle de comparaison est ici référencé 165.

Une étape suivante permet de superposer et de comparer les modèles de référence et de comparaison en utilisant un opérateur de comparaison (étape 170), sur un sous ensemble de zones actives correspondantes dans les deux modèles ou sur l'ensemble des deux modèles si aucune zone active n'est définie.

Un opérateur de comparaison consiste à déterminer les zones perturbées parmi les zones actives, c'est-à-dire à déterminer quelles zones actives ne correspondent pas entre les modèles de référence et de comparaison.

Un autre opérateur de comparaison consiste par exemple en la soustraction des superpositions des modèles, la valeur absolue donnant un critère de similarité permettant de déterminer les zones perturbées.

Les opérateurs peuvent également s'appliquer sur la totalité des modèles lorsqu'aucune zone active n'est définie. Dans ce cas, la zone active recouvre en fait l'ensemble des modèles.

Ces zones perturbées forment une liste de zones perturbées 175.

Enfin, une étape de traitement récursif (étape 180) permet d'améliorer la robustesse du système afin de déclencher les actions correspondant aux interactions détectées (étape 185). Ces traitements dépendent du type d'application visée.

De tels traitements consistent par exemple en l'observation récursive des perturbations afin d'extraire un modèle plus robuste, d'améliorer la recherche sur des zones actives perturbées et/ou d'affiner l'extraction un contour au dessus de l'objet en fonction des pixels perturbés et/ou la reconnaissance d'un geste de l'utilisateur.

La figure 2 illustre schématiquement un premier mode de réalisation du procédé selon l'invention, utilisant des zones actives de l'objet à suivre. Une zone active est ici une zone particulière d'une image dont la modification peut générer une action particulière permettant une interaction de l'utilisateur avec une scène de réalité augmentée.

Comme indiqué précédemment, le procédé comprend une première partie 200 correspondant à la phase d'initialisation et une seconde partie 205 correspondant aux traitements effectués en ligne pour permettre la détection en temps réel, dans une séquence d'images, d'interactions entre un utilisateur et une scène de réalité augmentée.

La phase d'initialisation comprend essentiellement les étapes 210 et 215. Comme l'étape 110, l'étape 210 a pour objet la création de modèles de référence 220.

Dans le cas d'un objet géométrique planaire, une représentation bidimensionnelle, par exemple une image, de l'objet à suivre permet de construire directement le modèle de référence.

Si une telle représentation n'est pas disponible, il est possible d'utiliser une image extraite du flux vidéo qui contient cet objet et sa pose associée, selon ses six degrés de liberté, pour projeter la représentation de cet objet et, ainsi, pour en extraire le modèle de référence. Il convient de remarquer ici qu'un modèle de référence peut également être obtenu de cette façon pour un objet géométrique tridimensionnel.

La conversion des coordonnées d'un point P de l'image issue de la séquence d'images, dont les coordonnées sont (x, y, z) dans un repère de l'objet associé au modèle de référence, dans le repère associé au modèle de référence peut être définie de la façon suivante :

$$P' = K.(R.P+T)$$

où

P' est la référence du point P dans le repère associé au modèle de référence, les coordonnées de P' étant des coordonnées 2D homogènes ;

R et T définissent la pose de l'objet dans le repère de la caméra selon sa rotation et sa translation par rapport à une position de référence ; et,

K est la matrice de projection contenant les paramètres intrinsèques à partir de laquelle sont issues les images.

La matrice K peut s'écrire sous la forme suivante,

$$K = \begin{pmatrix} fx & 0 & cx \\ 0 & fy & cy \\ 0 & 0 & 1 \end{pmatrix}$$

où le couple (fx, fy) représente les focales de la caméra exprimées en pixels et les coordonnées (cx, cy) représentent le centre optique de la caméra également exprimé en pixels.

De façon équivalente, la conversion peut s'exprimer selon la relation géométrique suivante :

$$P' = K.(R.P+R.R^{T}T) = K.R.(P+R^{T}T)$$

Si le modèle de référence représente une surface plane, les points du modèle de référence peuvent être définis dans un repère bidimensionnel, c'est-à-dire en considérant la coordonnée z nulle. Ainsi, en remplaçant $R^{T}T$ selon la

relation $\quad R^{T}T = T' = \begin{pmatrix} tx \\ ty \\ tz \end{pmatrix}$, la référence du point P dans le repère associé au modèle de référence s'exprime sous

la forme suivante,

$$P' \propto = K.R.(P + T') = K.R.\left(\begin{bmatrix} x & y & 0 \end{bmatrix}^t + \begin{bmatrix} tx & ty & tz \end{bmatrix}^t\right) = K.R.\begin{pmatrix} 1 & 0 & tx \\ 0 & 1 & ty \\ 0 & 0 & tz \end{pmatrix}\begin{pmatrix} X \\ Y \\ 1 \end{pmatrix}$$

Ainsi, une relation géométrique de type homographie est obtenue. Elle permet, à partir d'un point $\begin{pmatrix} Y \\ X \end{pmatrix}$

exprimé dans le repère de l'objet, de déterminer son correspondant $P' = \begin{pmatrix} u \\ v \\ w \end{pmatrix}$ dans le repère associé au modèle de référence.

Il est à noter que cette égalité ($\propto=$) s'exprime dans l'espace homogène, donc à un facteur d'échelle près. Le point P' s'exprime donc par le vecteur

$$P' = \begin{pmatrix} u/w \\ v/w \\ 1 \end{pmatrix}$$

Par conséquent, à partir de la pose de l'objet dans l'image considérée, il est possible de retrouver l'homographie K.R.A à appliquer à l'image contenant l'objet.

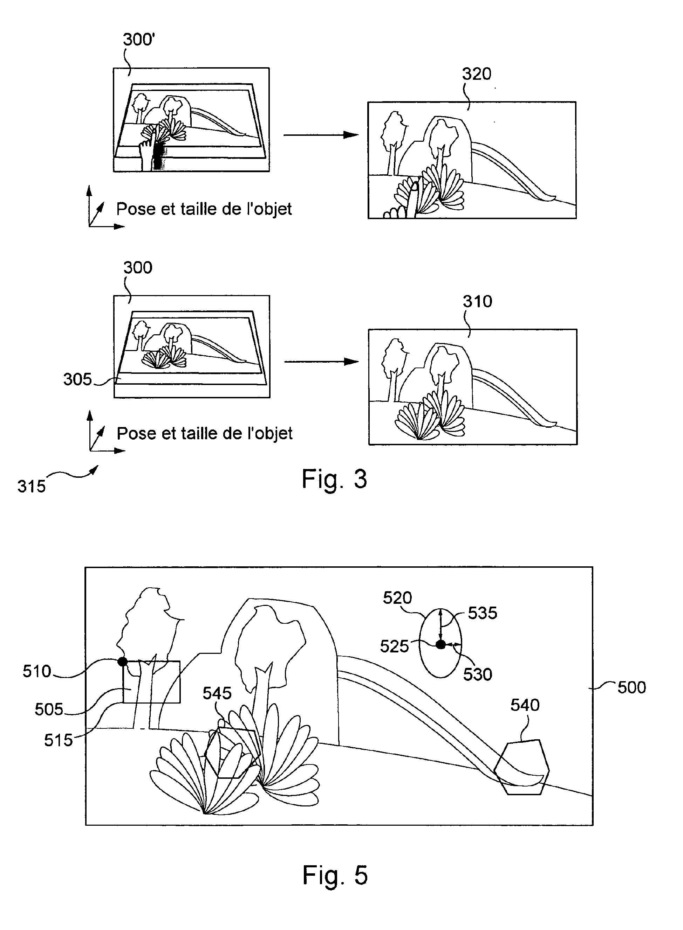

La figure 3 illustre un exemple de détermination d'un modèle de référence ou de comparaison à partir d'une image 300 comprenant l'objet 305 associé à ce modèle de référence ou de comparaison.

Comme représenté, l'image 300, issue d'une séquence d'images, est utilisée pour déterminer la représentation 310 d'un modèle de référence associé à un objet, ici la couverture d'un catalogue. La pose et la taille de cet objet, référencées 315, sont connues et utilisées pour projeter les points de l'image 300 correspondant à l'objet suivi dans la représentation 310. La taille et la pose de l'objet dans l'image 300 peuvent être définies par l'utilisateur ou déterminées automatiquement à l'aide d'un algorithme standard de suivi d'objet.

De la même façon, il est possible d'obtenir le modèle de comparaison 320 à partir de l'image 300', la taille et la pose de l'objet dans l'image 300' étant ici déterminées automatiquement à l'aide d'un algorithme standard de suivi d'objet.

Dans le cas d'un objet générique tridimensionnel, une solution consiste, pour créer un modèle de référence, à établir une correspondance entre cet objet et sa texture dépliée correspondant à l'objet réel.

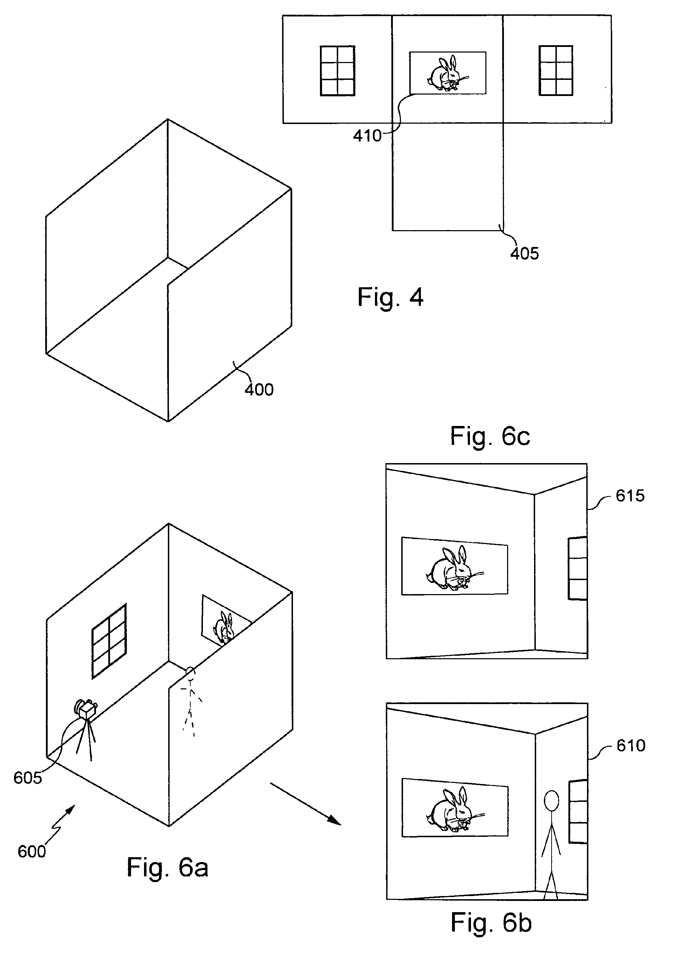

La figure 4 illustre un exemple de modèle de référence comprenant un objet tridimensionnel 400 et une texture associée 405 comprenant, dans cet exemple, un motif 410. La forme de la texture 405 est déterminée par le déplié de l'objet 400.

L'objet 400 représente, par exemple, une partie d'une pièce formée d'un sol et de trois murs, à l'intérieur de laquelle un utilisateur peut se déplacer.

De retour à la figure 2, l'étape 215 a pour objet de définir les zones actives 225 de l'objet suivi.

Une zone active est une forme géométrique particulière définie dans le modèle de référence. Les paramètres d'une zone active, par exemple sa forme, sa position, son orientation, sa taille en pixels et son nom d'identification, sont définis par l'utilisateur lors de la phase d'initialisation, c'est-à-dire avant le lancement de l'application. Seules ces zones sont sensibles à la détection de perturbations et permettent de déclencher une ou plusieurs actions autorisant une interaction de l'utilisateur avec une scène de réalité augmentée. Il peut exister des zones de recouvrement entre plusieurs zones actives. Par ailleurs, les zones actives peuvent représenter des surfaces discontinues, c'est-à-dire qu'une zone active comprend elle-même plusieurs zones actives liées entre elles.

Les zones actives peuvent être définies, par exemple, en utilisant une interface utilisateur et en sélectionnant des points dans le modèle de référence.

La figure 5 présente un exemple de modèle de référence d'un objet géométrique (non représenté) comprenant un ensemble de zones actives.

Le modèle de référence comprend ici quatre zones caractérisées par une forme géométrique définissant une surface. Le modèle de référence 500 comprend ainsi la zone active 505 définie par le point 510 et la surface rectangulaire 515 définie par la longueur de ses côtés. Le modèle géométrique 500 contient également la zone active 520 définie par le point 525 et les rayons 530 et 535 qui représentent la surface elliptique ainsi que les zones actives 540 et 545 représentées par des polygones.

Les zones actives sont de préférence définies dans un repère du modèle de référence. Les zones actives peuvent être définies, pour le cas d'un modèle tridimensionnel, directement sur le modèle lui-même, par exemple en sélectionnant un ensemble de facettes avec un outil d'interface utilisateur.

Lors de cette étape de définition des zones actives, l'opérateur de comparaison 230 qui sera utilisé par la suite pour détecter les interactions est de préférence déterminé.

La phase de détection en temps réel des interactions (205) nécessite la mise en oeuvre d'un algorithme de suivi d'objets (étape 235). Un tel algorithme permet de suivre des objets dans une séquence d'images, c'est-à-dire par exemple dans un flux vidéo 240, à partir d'informations de texture et de géométries.

Comme indiqué précédemment, ce type d'algorithme permet de déterminer pour chaque image, en particulier pour l'image courante 245, un identifiant 250 de chaque objet présent dans l'image et la pose 255 de l'objet selon six degrés de liberté (6DL) correspondant à la position et à l'orientation de l'objet.

L'étape 260 d'extraction du modèle de comparaison à partir de l'image courante 245, pour chaque objet géométrique suivis dans la séquence d'images, utilise les informations de pose déterminées par l'algorithme de suivi, en appliquant à la représentation de l'objet suivis une transformation géométrique permettant de le représenter dans le repère associé au modèle de référence.

Si le modèle de référence est une surface plane, l'extraction du modèle de comparaison est similaire à la détermination d'un modèle de référence telle que décrite précédemment et comme illustré sur la figure 3.

Lorsque le modèle de référence comprend un modèle générique 3D, le modèle de comparaison est obtenu directement à partir de l'image courante, par simple extraction de la représentation de l'objet suivi. Cependant, cette deuxième étape comprend en outre la détermination d'une projection du modèle de référence à partir de la position et de l'orientation de l'objet suivi, déterminé par l'algorithme de suivi, et de sa texture dépliée planaire. Cette projection permet de déterminer une représentation du modèle de référence qui peut être comparée au modèle de comparaison.

La figure 6, comprenant les figures 6a, 6b et 6c, illustre un exemple de détermination d'une représentation d'un modèle de référence.

La figure 6a représente une vue en perspective d'une scène réelle 600 dans laquelle se trouve un utilisateur. Au moins une partie de la scène réelle, statique, correspond ici à un modèle de référence, c'est-à-dire à l'objet suivi. La caméra 605, pouvant être mobile, permet de prendre une séquence d'images de la scène réelle 600, en particulier l'image 610 représentée sur la figure 6b. L'image 610 est ici considérée comme la représentation du modèle de comparaison.

A partir de l'image 610, l'algorithme de suivi est capable de déterminer la pose d'un objet. L'objet suivi étant ici immobile (environnement de la scène réelle) dans le repère de la scène réelle, l'algorithme de suivi détermine en réalité la pose de la caméra 605. Alternativement, l'objet suivi peut être en mouvement.

A partir de cette pose et du modèle de référence comprenant un modèle tridimensionnel et une texture associée, par exemple le modèle tridimensionnel 400 et la texture associée 405, il est possible de projeter le modèle de référence selon la pose de la caméra pour obtenir ainsi la représentation 615 du modèle de référence telle qu'illustrée sur la figure 6c.

Selon un mode de réalisation particulier, la représentation du modèle de référence est obtenue par simple lecture d'une mémoire de travail d'une carte graphique de rendu 3D. Dans ce cas, la carte graphique est utilisée selon son mode standard. Cependant, l'image calculée n'est pas destinée à être affichée mais est utilisée comme représentation du modèle de référence pour déterminer les zones perturbées.

En retournant à la figure 2, le modèle de comparaison est ici référencé 265.

Comme indiqué précédemment, une étape suivante permet de comparer les modèles de référence et de comparaison en utilisant ici un opérateur de corrélation (étape 270) sur toutes ou une partie des zones actives correspondantes des modèles. Cette opération a pour but de détecter des zones d'occlusion afin de détecter les indications de l'utilisateur pour effectuer une ou plusieurs actions particulières.

La détection d'occlusion dans une zone active est basée sur une comparaison temporelle de points caractéristiques dans chaque zone active. Ces points caractéristiques sont, par exemple, des points d'intérêts de Harris appartenant aux zones actives de l'image de référence.

Chaque zone active est ainsi caractérisée par un ensemble de points caractéristiques de référence en fonction de la qualité réelle de l'image de la caméra.

De façon similaire, il est possible d'extraire des points d'intérêts sur l'objet suivi en temps réel dans le flux vidéo. Il est à noter que ces points peuvent être déterminés par l'algorithme de suivi d'objets. Cependant, ces points, notamment les points déterminés à l'aide d'un détecteur de Harris, ne sont pas robustes à certains changements d'échelle, certaines transformations affines ou changements d'éclairage. Les points caractéristiques sont ainsi avantageusement détectés sur le modèle de référence, lors de l'étape hors ligne, et sur le modèle de comparaison, pour chaque nouvelle image du flux vidéo, après l'étape de transformation géométrique.

La correspondance entre les points caractéristiques de référence, c'est-à-dire les points caractéristiques des zones actives du modèle de référence, et les points caractéristiques courant, c'est-à-dire les points caractéristiques des zones actives du modèle de comparaison, est ensuite déterminée. Les deux critères suivants sont par exemple utilisés pour déterminer la correspondance,

- l'opérateur de corrélation croisé appelé ZNCC (sigle de *Zero Normalized Cross Correlation* en terminologie anglosaxonne) qui permet de comparer l'intensité d'un groupe de pixel sur une fenêtre prédéfinie et d'en extraire une mesure de similarité ; et,
- un opérateur de distance dans le plan. La transformation géométrique entre la pose de l'objet dans l'espace et le modèle de référence étant connu, il est possible de mesurer la distance entre un point caractéristique de référence et un point caractéristique courant. Cette distance doit être proche de zéro. Il convient de remarquer que cette distance étant proche de zéro, un opérateur de différence pixel à pixel peut avantageusement être utilisé.

D'autres opérateurs de comparaison peuvent intervenir dans la recherche des appariements entre le modèle de référence et le modèle de comparaison. Il s'agit par exemple des descripteurs de type *Local Jet* qui caractérisent les points d'intérêts de façon directionnelles grâce à l'utilisation de dérivées directionnelles du signal vidéo, ou encore l'utilisation de descripteurs de type SIFT (acronyme de *Scale-Invariant Feature Transform* en terminologie anglosaxonne) ou SURF (acronyme de *Speeded Up Robust Features* en terminologie anglo-saxonne). Ces opérateurs, souvent plus coûteux en termes de temps de calcul, sont généralement plus robustes aux variations géométriques qui interviennent dans l'extraction des modèles.

La détection d'occlusion comprend avantageusement les deux étapes suivantes : une étape de localisation des points correspondant aux points d'intérêts de référence dans l'image courante et une étape optionnelle de validation de la correspondance après localisation.

Si le point n'est pas localisé ou si la localisation du point n'est pas validée, alors il existe une occlusion sur ce point. Réciproquement, si le point est localisé et que la localisation du point est validée, alors il n'existe pas d'occlusion sur ce point

Il convient de remarquer que si la pose courant de l'objet suivi était parfaite et que l'objet suivi était totalement rigide, l'étape de localisation des points correspondant aux points d'intérêts de référence dans l'image courante, appelés Pr, ne serait pas nécessaire. En effet, dans ce cas, l'image courante reprojetée dans le repère du modèle de référence se superposerait parfaitement à ce dernier. L'opérateur ZNCC pourrait alors n'être utilisé que sur une fenêtre autour des points Pr pour détecter les occlusions.

Cependant, les algorithmes de suivi d'objets sont souvent limités en termes de précision sur le calcul de pose. Ces erreurs peuvent être liées par exemple à des déformations de l'objet à suivre. Les coordonnées planaire (u,v) d'un point p appartenant à l'ensemble Pr sont ainsi estimées par les coordonnées $(u+u_{err},v+v_{err})$ dans l'image de comparaison.

Par conséquent, il est conseillé de rechercher chaque point p dans une fenêtre autour de la position idéale (u, v). Lors de cette étape de localisation, il n'est pas nécessaire d'utiliser une fenêtre trop grande pour retrouver de façon fiable la position de la correspondance du point p dans l'image courante (si ce point n'est pas occulté). La fenêtre de recherche doit rester cependant suffisamment grande pour prendre en considération les erreurs de l'algorithme de suivi d'objet tout en évitant un traitement trop coûteux en termes de performance.

L'étape de localisation peut indiquer une corrélation positive, c'est-à-dire indiquer la position d'un point correspondant à un point d'intérêt de référence dans l'image courante alors même que ce point n'est pas présent dans l'image courante.

Pour éviter de telles erreurs, un second calcul de corrélation plus restrictif en terme du seuil de corrélation est de préférence appliqué à une fenêtre plus grande autour du point dans chaque image afin de valider la localisation. En effet, plus la taille de la fenêtre de corrélation est importante, plus le résultat de la corrélation est fiable.

Ces étapes de localisation et de validation peuvent être mises en oeuvre avec d'autres opérateurs de corrélation, la description précédente n'étant pas limitative.

A la fin du traitement, un nombre de points d'intérêt de référence qui sont détectés comme occultés est obtenu pour chaque zone active.

Pour déterminer si une zone active doit être considérée comme perturbée, il est possible d'utiliser, sur cette zone, le ratio du nombre de points d'intérêt de référence considérés comme occultés en fonction du nombre de points d'intérêt de référence.

Si la valeur de ce ratio dépasse un seuil prédéterminé, il est considéré que la zone active correspondante est perturbée. A l'inverse, si la valeur de ce ratio est inférieure ou égale au seuil utilisé, il est considéré que la zone active correspondante n'est pas perturbée.

La liste des zones actives perturbées 275 est ainsi obtenue.

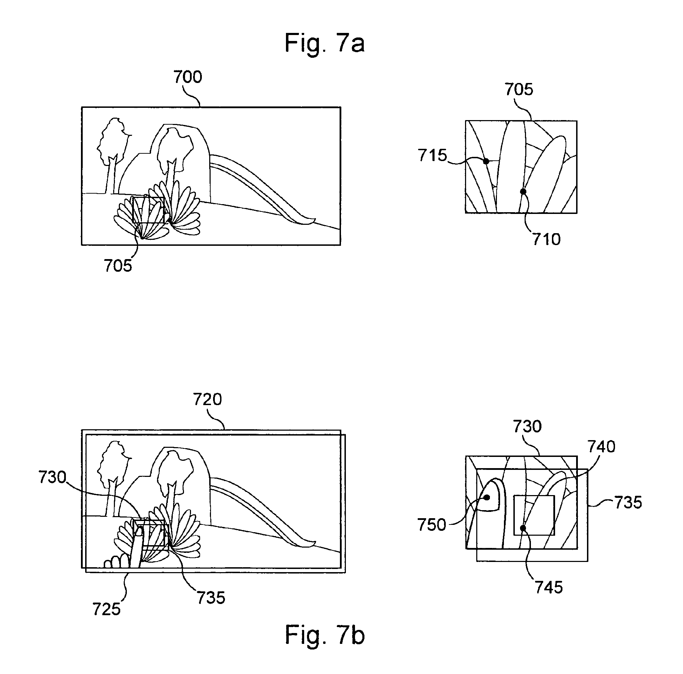

La figure 7, comprenant les figures 7a et 7b, illustre un exemple de comparaison d'une zone active d'une représentation d'un modèle de référence à celle d'un modèle de comparaison permettant de déterminer si la zone active est perturbée. Dans un souci de clarté, la représentation du modèle de référence est appelée image de référence et la représentation du modèle de comparaison est appelée image de comparaison.

Comme illustré sur la figure 7a, l'image de référence 700 comprend ici une zone active 705 comprenant elle-même les deux points d'intérêt de référence 710 et 715.

L'image de comparaison 720 représentée sur la figure 7b n'est pas parfaitement alignée avec l'image de référence dont le contour, référencé 725, est représenté dans le même repère. Une telle erreur d'alignement peut notamment résulter de l'algorithme de suivi d'objet. L'image de comparaison 720 comprend une zone active 730 correspondant à la zone active 705 de l'image de référence. La référence 735 représente le contour de la zone active de référence qui est décalée par rapport à la zone active de comparaison comme le sont les images de référence et de comparaison

Pour trouver le point correspondant au point de référence 710, une fenêtre de recherche 740, centrée sur le point de la zone active de l'image de comparaison ayant les coordonnées du point de référence 710 est utilisée. La mise en oeuvre de l'étape de localisation permet d'identifier le point 745. Si la localisation du point 745 est validée, il n'y a pas d'occlusion sur le point 710.

De façon similaire, pour trouver le point 750 correspondant au point de référence 715, une fenêtre de recherche, centrée sur le point de la zone active de l'image de comparaison ayant les coordonnées du point de référence 715 est utilisée. Cependant, la mise en oeuvre de l'étape de localisation ne permet pas d'identifier ici le point 750 correspondant au point 715. Par conséquent, il y a occlusion sur ce point.

En utilisant plusieurs points d'intérêt, il est ainsi possible de déterminer que la zone active 705 est perturbée dans l'image courante 720.

En retournant à la figure 2 et après avoir déterminé la liste des zones actives perturbées, une étape de traitement récursif (étape 280) est effectuée pour déclencher des actions (étape 285). Ces traitements dépendent du type d'application visée.

Il convient de remarquer qu'il est difficile dans ce type d'application de déterminer le contact entre la main de l'utilisateur et l'objet suivi. Une étape de traitement récursif correspondant à une seconde étape de validation est par conséquent de préférence mise en oeuvre à partir de l'une des méthodes suivantes,

- étude récursive par filtrage dans le temps des zones actives occultées. Ainsi lorsque l'utilisateur s'attarde sur une zone active, cela correspond à une validation de l'action sur cette zone ;
- mise en oeuvre d'un seuil sur les perturbations de la pose de l'objet suivi (si l'objet est statique, par exemple posé sur une table, mais non fixé au décor). L'utilisateur peut confirmer son choix en faisant bouger légèrement l'objet en appliquant une pression sur la zone active voulue ; ou,
- utilisation d'un capteur sonore afin de détecter le bruit de l'interaction de collision entre les doigts de l'utilisateur et la surface de l'objet cible.

De façon plus générale, les données correspondant aux zones actives sont filtrées. Le filtre utilisé peut notamment être un filtre de mouvement (si l'objet bouge trop vite dans l'image, il est possible de bloquer la détection). Le filtre utilisé peut également être un filtre récursif selon lequel les états d'occultation sont mémorisés pour chaque zone active afin de vérifier la cohérence de l'occultation dans le temps et rendre ainsi plus robuste le système en terme de fausses détections.

La figure 8 illustre schématiquement un second mode de réalisation du précédé selon l'invention n'utilisant pas, ici, de zone active de l'objet à suivre. Cependant, il convient de noter que des zones actives peuvent néanmoins être utilisées dans ce mode de réalisation. Un opérateur de différence entre un modèle de référence et un modèle de comparaison est ici utilisé pour détecter une action particulière permettant une interaction de l'utilisateur avec une scène de réalité augmentée. Un tel mode de réalisation est notamment adapté à détecter des occultations dans des zones pauvres en nombre de points d'intérêts.

Comme indiqué précédemment, le procédé comprend une première partie 800 correspondant à la phase d'initialisation et une seconde partie 805 correspondant aux traitements effectués en ligne pour permettre la détection en temps réel, dans une séquence d'images, d'interactions entre un utilisateur et une scène de réalité augmentée.

La phase d'initialisation comprend essentiellement les étapes 810 et 815. L'étape 810, qui a pour objet la création de modèles de référence 820, est ici similaire à l'étape 210 décrite en référence à la figure 2.

Pour utiliser un algorithme de soustraction colorimétrique entre deux images, il est nécessaire de rendre les modèles de référence plus robustes aux variations de luminosité, aux ombrages et aux bruits présents dans le signal vidéo. Des perturbations peuvent donc être générées à partir du modèle de référence.

Les variations générées sur le modèle de référence sont, par exemple, les suivantes,

- perturbations de la pose de l'image ;
- perturbations colorimétriques ;
- perturbations d'intensité lumineuse ; et,
- bruits correspondant au mieux à un signal vidéo, par exemple un bruit uniforme ou gaussien.

Une étape d'apprentissage (étape 815) a ici pour objet la création d'un modèle gaussien 825 sur chaque composante du signal vidéo. Cette étape consiste par exemple à déterminer et à mémoriser un ensemble de plusieurs images représentant le modèle de référence (dans le cas tridimensionnel, il s'agit de la texture, ou *UV map*), ces images comprenant au moins certaines des perturbations décrites précédemment.

L'étape d'apprentissage, pour le cas d'un signal RGB, est par exemple la suivante : pour chaque pixel de toutes les images perturbées correspondant au modèle de référence, un modèle gaussien de distribution est déterminé. Ce modèle peut être composé d'une valeur médiane ($\mu$) et d'un écart type ($\sigma$) pour chaque composante R, G et B : <$\mu$R, $\sigma_{RR}$>, <$\mu$G, $\sigma_{GG}$>, <$\mu$B, $\sigma_{BB}$>.

Il est également possible de construire k modèles gaussiens afin d'améliorer la robustesse au bruit ou à l'erreur d'estimation de pose lié à l'algorithme de suivi utilisé. Lorsqu'un pixel d'une image s'éloigne trop de la moyenne construite, un nouveau modèle gaussien est ajouté. Ainsi, pour chaque composante R, G et B, un ensemble de modèles gaussiens est déterminé : [<$\mu$R1, $\sigma_{RR1}$>, ..., <$\mu$Rn, $\sigma_{RRn}$>], [<$\mu$G1, $\sigma_{GG1}$>, ..., <$\mu$Gn, $\sigma_{GGn}$>], [<$\mu$B1, $\sigma_{BB1}$>, ..., <$\mu$Bn, $\sigma_{BBn}$>]).

Lors de cette étape d'apprentissage des modèles de référence, l'opérateur de comparaison 830 qui sera utilisé par la suite pour détecter les interactions est de préférence déterminé.

Les étapes 840 à 855 permettant d'obtenir l'image courante et la pose des objets suivis dans celle-ci sont identiques aux étapes 240 à 255.

De même, l'étape 860 d'extraction du modèle de comparaison 865 est similaire à l'étape 260 permettant d'obtenir le modèle de comparaison 265.

L'étape 870 de comparaison des modèles de référence et de comparaison consiste par exemple à appliquer l'opérateur suivant,

- détermination de la distance de Mahalanobis entre le modèle gaussien et le pixel courant ayant les composantes (R, G, B) selon la relation suivante,

$$v = \frac{(\mu R - R)^2}{\sigma_{RR}} + \frac{(\mu G - G)^2}{\sigma_{GG}} + \frac{(\mu B - B)^2}{\sigma_{BB}} \; ;$$

et,

- si la distance de Mahalanobis calculée (v) est supérieure à un seuil prédéterminé ou calculé en fonction de la colorimétrie de l'image courante, le pixel est marqué comme appartenant à l'avant plan, c'est-à-dire comme n'appartenant pas au modèle de référence ;
- sinon le pixel est marqué comme appartenant à l'arrière plan, c'est-à-dire comme appartenant au modèle de référence.

A la suite de cette étape, une carte 875 de pixels n'appartenant pas à l'arrière plan, c'est-à-dire comme n'appartenant pas au modèle de référence, est obtenue. La carte ainsi obtenue représente les pixels perturbés.

De la même façon, il est possible de déterminer la distance de Mahalanobis entre chaque pixel courant et chacun des k modèles gaussiens déterminés selon la relation suivante,

$$v_k = \frac{(\mu Rk - R)^2}{\sigma_{RRk}} + \frac{(\mu Gk - G)^2}{\sigma_{GGk}} + \frac{(\mu Bk - B)^2}{\sigma_{BBk}}$$

Un poids wi est associé à chacun de ces k modèles gaussiens, ce poids étant déterminé en fonction de sa fréquence d'apparition. Il est ainsi possible de calculer une probabilité à partir de ces distributions et d'en déduire une carte représentant les pixels perturbés. Ces k modèles gaussiens sont d'abord construits comme décrit précédemment durant la phase d'apprentissage et peuvent avantageusement être mis à jour pendant la phase de régime permanent afin de mieux s'adapter aux perturbations dans l'image courante.

Il est possible, de la même façon, de traiter les pixels par groupe de voisins afin d'obtenir une carte d'occlusions plus robuste.

Il est possible de mémoriser récursivement les cartes de pixels perturbés (étape 880) et d'appliquer des opérateurs de morphologie mathématique afin d'extraire des groupes de pixels en paquets. Un opérateur récursif simple consiste à utiliser un « et » algorithmique entre deux cartes de pixels perturbés successives afin de supprimer les pixels isolés. D'autres opérateurs classiques comme la dilation, l'érosion, la fermeture ou des opérateurs d'analyse par composantes connexes peuvent également venir compléter le processus.

Il est ensuite possible d'utiliser un algorithme d'extraction de contour pour permettre la comparaison de ce contour avec des contours prédéterminés dans une base de données et ainsi identifier des commandes gestuelles et déclencher des actions correspondantes (étape 885).

Il convient de remarquer ici que les premier et second modes de réalisation décrits précédemment peuvent être combinés, certains modèles de référence ou certaines parties d'un modèle de référence étant traités selon le premier mode de réalisation tandis que d'autres sont traités selon le second mode de réalisation.

Selon un premier exemple d'utilisation, le procédé offre la possibilité à un utilisateur d'interagir avec des objets planaires réels. Ces objets contiennent un ensemble de cibles visibles ou non, pouvant correspondre à des zones actives, associées à une action ou à un ensemble d'actions, qui peut influencer la scène de réalité augmentée. Il convient de noter que plusieurs modèles d'objets planaires peuvent être disponibles et le procédé faire l'objet d'une étape supplémentaire de reconnaissance afin d'identifier quel est ou quels sont les objets présents, à suivre, dans le flux vidéo. Ces objets, après avoir été identifiés et après que leur pose soit déterminée, peuvent par exemple déclencher l'apparition de différents modèles de voitures. Il est ensuite possible de pointer les cibles de chacun des objets pour déclencher des animations telles que l'ouverture des portes ou du toit ou changer la couleur du véhicule affiché.

Dans le même contexte d'utilisation, une application de type « puzzle » peut être mise en place avec la possibilité pour l'utilisateur de résoudre des énigmes grâce à un environnement sonore et visuel dédié. Ces énigmes peuvent également prendre la forme de « quizz » où l'utilisateur devra répondre en occultant la zone de son choix.

Toujours dans un même contexte d'utilisation, il est possible de prendre le contrôle d'une application de type interface utilisateur aussi appelée GUI (sigle de *Graphical User Interface* en terminologie anglo-saxonne) pour naviguer de façon ergonomique dans une application logicielle.

Dans le cas d'une application de suivi de visage, il est possible d'ajouter des lunettes virtuelles lorsque l'utilisateur passe sa main sur ses tempes ou d'ajouter du maquillage lorsque les joues sont occultées.

Dans le cas d'un suivi d'objet de bonne qualité, par exemple pour des objets rigides, il est possible de procéder à une soustraction de fond sans phase d'apprentissage manuelle habituellement nécessaire à l'utilisation de ce type d'algorithme. De plus l'utilisation de la solution décrite permet de dissocier l'utilisateur du fond tout en étant totalement robuste aux mouvements de la caméra. En combinant celle-ci avec une approche utilisant un opérateur de corrélation, il est aussi possible de rendre l'approche robuste aux changements rapides d'éclairage.

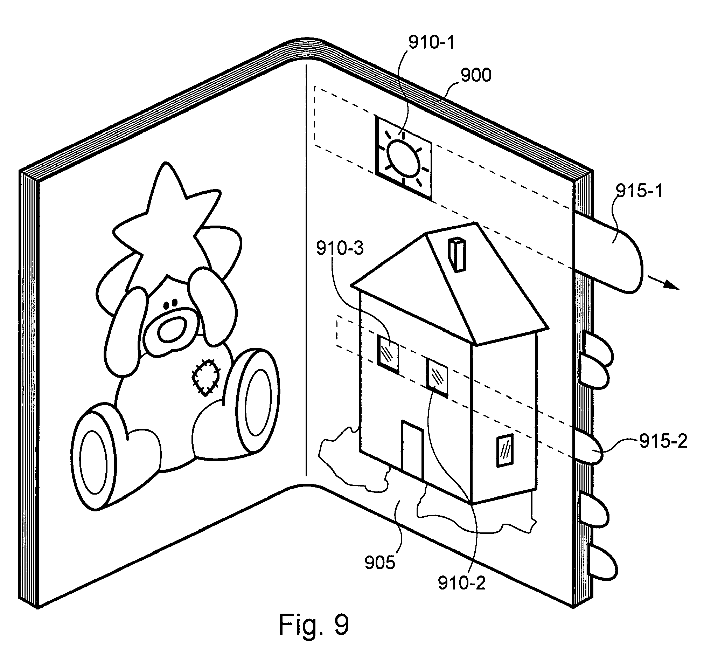

La figure 9 illustre un deuxième exemple d'utilisation selon lequel la détection d'une interaction est liée à une modification de l'objet suivi et non simplement à la présence d'un objet extérieur masquant au moins partiellement l'objet suivi. L'exemple présenté ici vise des scénarii de réalité augmentée appliqués aux livres pour enfants tels que des livres dits « à tirette » permettant à un enfant d'interagir avec le contenu du livre afin de faire évoluer l'histoire.

Le livre à tirette 900 comprend notamment la page 905 sur laquelle est représentée une illustration. La page 905 comprend ici trois ouvertures 910-1, 910-2 et 910-3 permettant de visualiser les motifs réalisés sur des bandes mobiles 915-1 et 915-2. Les motifs visualisés varient selon la position des bandes. Typiquement, la page 905 appartient à une feuille formée elle-même de deux feuilles, partiellement collées l'une à l'autre, entre lesquelles peuvent coulisser les bandes 915-1 et 915-2 dont une extrémité, la « tirette », dépasse du pourtour de la feuille.

Par exemple, il est possible de voir une représentation de la lune dans l'ouverture 910-1 lorsque la bande 915-1 est dans une première position et une représentation du soleil lorsque cette bande est dans une seconde position (comme illustré).

Les ouvertures 910-1 à 910-3 peuvent être considérées comme des zones actives dont la perturbation déclenche une interaction. Ainsi, la manipulation des « tirettes » du livre 900 permet de déclencher des actions par la modification des motifs des zones actives.

Un algorithme de reconnaissance de formes peut être mis en oeuvre pour identifier les actions devant être exécutées selon les motifs identifiés dans les zones actives.

Des actions peuvent également être exécutées en masquant ces zones actives selon le principe décrit précédemment.

Enfin, de façon générale, le procédé selon l'invention permet également de mettre en oeuvre une application qui vise à déplacer et positionner des objets de synthèses dans un espace 3D pour mettre en place des scénarii de réalité augmentée.

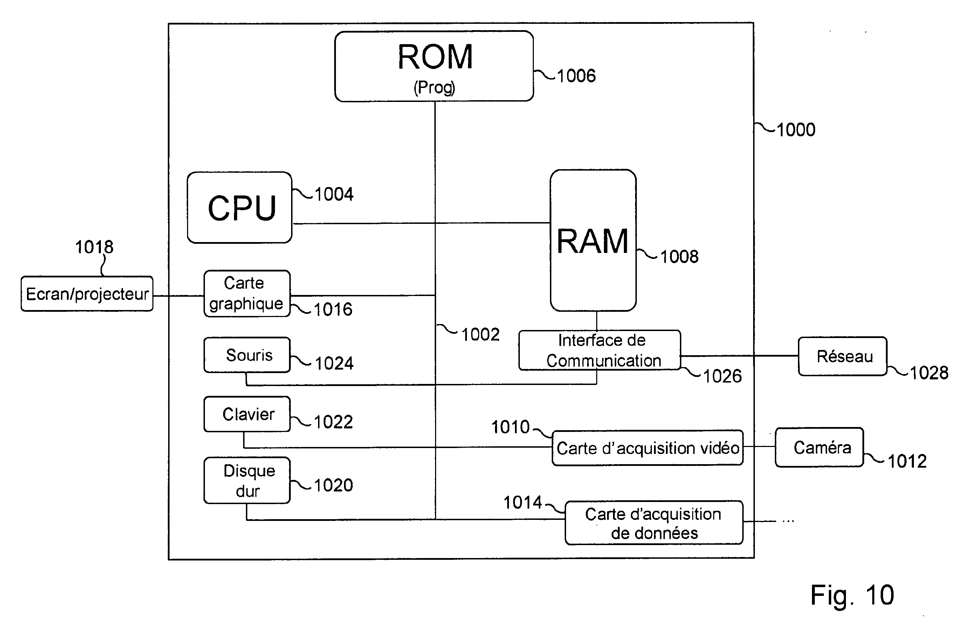

Un appareil mettant en oeuvre l'invention ou une partie de l'invention est illustré sur la figure 10. L'appareil 1000 est par exemple un micro-ordinateur, une station de travail ou une console de jeux.

L'appareil 1000 comporte de préférence un bus de communication 1002 auquel sont reliés :

- une unité centrale de traitement ou microprocesseur 1004, aussi appelée CPU (sigle de *Central Processing Unit* en terminologie anglo-saxonne) ;
- une mémoire morte 1006, aussi appelée ROM (sigle de Read *Only Memory* en terminologie anglo-saxonne), pouvant comporter le système d'exploitation et des programmes tels que "Prog" ;
- une mémoire vive ou mémoire cache 1008, aussi appelée RAM (sigle de *Random Access Memory* en terminologie anglo-saxonne), comportant des registres adaptés à enregistrer des variables et paramètres créés et modifiés au cours de l'exécution des programmes précités ;
- une carte d'acquisition vidéo 1010 reliée à une caméra 1012 ; et
- une carte graphique 1016 reliée à un écran ou à un projecteur 1018.

Optionnellement, l'appareil 1000 peut également disposer des éléments suivants :

- un disque dur 1020 pouvant comporter les programmes "Prog" précités et des données traitées ou à traiter selon l'invention ;
- un clavier 1022 et une souris 1024 ou tout autre dispositif de pointage comme un crayon optique, un écran tactile ou une télécommande permettant à l'utilisateur d'interagir avec les programmes selon l'invention ;
- une interface de communication 1026 reliée à un réseau de communication distribué 1028, par exemple le réseau Internet, l'interface étant apte à transmettre et à recevoir des données ;
- une carte d'acquisition de données 1014 reliée à un capteur (non représenté) ; et,
- un lecteur de cartes mémoires (non représenté) adapté à y lire ou à y écrire des données traitées ou à traiter selon l'invention.

Le bus de communication permet la communication et l'interopérabilité entre les différents éléments inclus dans l'appareil 1000 ou reliés à lui. La représentation du bus n'est pas limitative et, notamment, l'unité centrale est susceptible de communiquer des instructions à tout élément de l'appareil 1000 directement ou par l'intermédiaire d'un autre élément de l'appareil 1000.

Le code exécutable de chaque programme permettant à l'appareil programmable de mettre en oeuvre les processus selon l'invention, peut être stocké, par exemple, dans le disque dur 1020 ou en mémoire morte 1006.

Selon une variante, le code exécutable des programmes pourra être reçu par l'intermédiaire du réseau de communication 1028, via l'interface 1026, pour être stocké de façon identique à celle décrite précédemment.

Les cartes mémoires peuvent être remplacées par tout support d'information tel que, par exemple, un disque compact (CD-ROM ou DVD). De manière générale, les cartes mémoires peuvent être remplacées par des moyens de stockage d'information, lisibles par un ordinateur ou par un microprocesseur, intégrés ou non à l'appareil, éventuellement amovibles, et adaptés à mémoriser un ou plusieurs programmes dont l'exécution permet la mise en oeuvre du procédé selon l'invention.

De manière plus générale, le ou les programmes pourront être chargés dans un des moyens de stockage de l'appareil 1000 avant d'être exécutés.

L'unité centrale 1004 va commander et diriger l'exécution des instructions ou portions de code logiciel du ou des programmes selon l'invention, instructions qui sont stockées dans le disque dur 1020 ou dans la mémoire morte 1006 ou bien dans les autres éléments de stockage précités. Lors de la mise sous tension, le ou les programmes qui sont stockés dans une mémoire non volatile, par exemple le disque dur 1020 ou la mémoire morte 1006, sont transférés dans la mémoire vive 1008 qui contient alors le code exécutable du ou des programmes selon l'invention, ainsi que des registres pour mémoriser les variables et paramètres nécessaires à la mise en oeuvre de l'invention.

La carte graphique 1016 est, de préférence, une carte graphique de rendu 3D adaptée notamment à déterminer une représentation bidimensionnelle à partir d'un modèle tridimensionnel et d'information de texture, la représentation bidimensionnelle étant accessible en mémoire et n'étant pas nécessairement affichée.

Naturellement, pour satisfaire des besoins spécifiques, une personne compétente dans le domaine de l'invention pourra appliquer des modifications dans la description précédente.

**Revendications**

**1.** Procédé de détection en temps réel d'au moins une interaction entre un utilisateur et une scène de réalité augmentée dans au moins une image d'une séquence d'images, ladite au moins une interaction résultant de la modification de l'apparence de la représentation d'au moins un objet présent dans ladite au moins une image, ce procédé étant **caractérisé en ce qu'**il comprend les étapes suivantes,

- dans une phase d'initialisation (100, 200, 800),

  o création (110, 210, 810) d'au moins un modèle de référence associé audit au moins un objet ;
  o traitement (115, 215, 815) dudit au moins un modèle de référence ;

- dans une phase d'utilisation

  o détermination (135, 235, 835) de la pose dudit au moins un objet dans ladite au moins une image ;
  o extraction (160, 260, 860) d'au moins un modèle de comparaison de ladite au moins une image selon ledit au moins un objet ; et,
  o comparaison (170, 270, 870) dudit au moins un modèle de référence traité et dudit au moins un modèle de comparaison en fonction de ladite pose déterminée et détection de ladite au moins une interaction en réponse à ladite étape de comparaison.

2. Procédé selon la revendication 1 selon lequel ladite étape de détermination de la pose dudit au moins un objet dans ladite au moins une image met en oeuvre un algorithme de suivi d'objet.

3. Procédé selon la revendication 1 ou la revendication 2 selon lequel lesdites étapes de la phase d'utilisation sont répétées au moins une fois sur au moins une seconde image de ladite séquence d'images.

4. Procédé selon la revendication précédente comprenant en outre une étape de traitement récursif (180, 280, 880) du résultat de ladite étape de comparaison.

5. Procédé selon l'une quelconque des revendications précédentes selon lequel ladite étape de traitement dudit au moins un modèle de référence comprend une étape de définition (215) d'au moins une zone active dans ledit au moins un modèle de référence, ledit procédé comprenant en outre une étape de détermination de ladite au moins une zone active dans ledit modèle de comparaison durant ladite phase d'utilisation, ladite étape de comparaison étant basée sur lesdites zones actives.

6. Procédé selon la revendication précédente comprenant en outre la détermination d'au moins un point de référence dans ladite au moins une zone active dudit au moins un modèle de référence, ladite étape de comparaison comprenant une étape de localisation dudit au moins un point de référence dans ladite zone active dudit modèle de comparaison.

7. Procédé selon l'une quelconque des revendications précédentes selon lequel ladite étape de comparaison comprend une étape d'évaluation de la corrélation d'au moins une partie dudit au moins un modèle de référence traité et d'au moins une partie dudit au moins un modèle de comparaison.

8. Procédé selon l'une quelconque des revendications 1 à 6 selon lequel ladite étape de comparaison comprend une étape d'évaluation de la différence d'au moins une partie dudit au moins un modèle de référence traité avec au moins une partie dudit au moins un modèle de comparaison.

9. Procédé selon l'une quelconque des revendications précédentes selon lequel ladite étape de création dudit modèle de référence comprend une étape de transformation géométrique de type homographique d'une représentation dudit au moins un objet.

10. Procédé selon l'une quelconque des revendications précédentes selon lequel ledit au moins un modèle de comparaison est déterminé selon ladite pose dudit au moins un objet, ladite étape d'extraction dudit modèle de comparaison comprenant une étape de transformation géométrique de type homographique d'au moins une partie de ladite au moins une image.

11. Procédé selon l'une quelconque des revendications précédentes selon lequel ladite étape de création dudit au moins un modèle de référence comprend une étape de détermination d'au moins un modèle gaussien représentatif de la distribution d'au moins un paramètre d'au moins un élément dudit modèle de référence.

12. Procédé selon la revendication précédente selon lequel ladite étape de comparaison comprend une étape d'évaluation d'une mesure de distance entre au moins un point dudit modèle de comparaison correspondant audit au moins un point dudit modèle de référence et ledit modèle gaussien associé audit au moins un point dudit modèle de référence.

**13.** Procédé selon l'une quelconque des revendications 1 à 9 selon lequel ledit modèle de référence comprend un modèle géométrique tridimensionnel et une texture associée, le procédé comprenant en outre une étape de détermination, durant ladite phase d'utilisation, d'une représentation dudit modèle de référence selon ladite pose dudit au moins un objet et selon ledit modèle géométrique et ladite texture.

**14.** Procédé selon l'une quelconque des revendications précédentes comprenant en outre une étape d'activation d'au moins une action en réponse à ladite détection de ladite au moins une interaction.

**15.** Procédé selon l'une quelconque des revendications précédentes selon lequel ladite modification de l'apparence dudit au moins un objet résulte de la présence d'un objet, appelé second objet, distinct dudit au moins un objet, entre ledit au moins un objet et la source de ladite au moins une image.

**16.** Procédé selon l'une quelconque des revendications précédentes selon lequel ladite modification de l'apparence dudit au moins un objet résulte d'une modification dudit au moins un objet.

**17.** Programme d'ordinateur comprenant des instructions adaptées à la mise en oeuvre de chacune des étapes du procédé selon l'une quelconque des revendications précédentes.

**18.** Dispositif comprenant des moyens adaptés à la mise en oeuvre de chacune des étapes du procédé selon l'une quelconque des revendications 1 à 16.

Fig. 1

Fig. 2

300'

320

Pose et taille de l'objet

300

310

305

Pose et taille de l'objet

315

## Fig. 3

520

535

525

530

510

505

515

545

540

500

## Fig. 5

410

405

Fig. 4

Fig. 6c

615

610

605

600

Fig. 6a

Fig. 6b

EP 2 141 656 A1

# Fig. 7a

# Fig. 7b

20

810

Création
modèles de
référence

800

815

Apprentissage
modèles de
référence

820

Modèles de
référence

825

Modèles gaussiens
(pixels ou groupes)

830

Opérateurs comparaison
de colorimétrie

Flux Vidéo 840

860

Extraction
modèle de
comparaison

865

Modèle de
comparaison

835

Algorithme de
suivi d'objets

870

Comparaison
des modèles
(soustraction de
fond)

845

Image Courante

| ID objet | Pose 6DL |
|---|---|
| | |
| | |
| ... | ... |

850

855

875

Image avec liste
de zones
perturbées

880

Opérateur
binaire récursif/
Extraction
de contours

Actions 885

805

Fig. 8

Fig. 9

EP 2 141 656 A1

Fig. 10

EP 2 141 656 A1

# EP 2 141 656 A1

Europäisches Patentamt
European Patent Office
Office européen des brevets

## RAPPORT DE RECHERCHE EUROPEENNE

Numéro de la demande

EP 09 29 0480

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JING CH ET AL: "An Improved Real-Time Natural Feature Tracking Algorithm for AR Application" PROCEEDINGS OF THE INTERNATIONAL CONFERENCE ON ARTIFICIAL REALITY AND TELEXISTENCE-WORKSHOP, 1 novembre 2006 (2006-11-01), pages 119-124, XP008084001 | 1-7,9, 10,13, 14,16-18 | INV. G06T7/00 G06T7/20 |
| Y | | 11,12 | |
| A | * abrégé * * page 119, colonne 1 * * page 120, colonne 1, ligne 32 - page 122, colonne 1 * ----- | 8,15 | |
| X | BREEN D. E. ET AL: "Interactive occlusion and automatic object placement for augmented reality" CONGRÈS EUROGRAPHICS '96, POITIERS, FRANCE, vol. 15, no. 3, 26 août 1996 (1996-08-26), pages 11-22, XP002515919 ISSN: 0167-7055 | 1-4,9, 10, 13-15, 17,18 | |
| A | * abrégé * * page 12, ligne 49 - ligne 51 * * page 13 * * page 13, ligne 39 - page 17, ligne 4 * ----- -/-- | 5-8,11, 12,16 | DOMAINES TECHNIQUES RECHERCHES (IPC) G06T |

Le présent rapport a été établi pour toutes les revendications

| Lieu de la recherche | Date d'achèvement de la recherche | Examinateur |
|---|---|---|
| Munich | 28 septembre 2009 | Millet, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

24

Europäisches
Patentamt

European
Patent Office

Office européen
des brevets

# RAPPORT DE RECHERCHE EUROPEENNE

Numéro de la demande

EP 09 29 0480

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | LEPETIT V ET AL: "Fully automated and stable registration for augmented reality applications" PROCEEDINGS OF THE SECOND IEEE AND ACM INTERNATIONAL SYMPOSIUM ON MIXED AND AUGMENTED REALITY, 2003, 7 octobre 2003 (2003-10-07), - 10 octobre 2003 (2003-10-10) pages 93-102, XP010662800 PISCATAWAY, NJ, USA,IEEE ISBN: 978-0-7695-2006-3 | 1-6, 8-10, 13-18 | |
| Y | | 11,12 | |
| A | * abrégé * * page 93, colonne 2, ligne 8 - ligne 12 * * page 95 * * page 96 - page 97 * ----- | 7 | |
| Y | DESELAERS T ET AL: "Discriminative Training for Object Recognition Using Image Patches" IEEE COMPUTER SOCIETY CONFERENCE ON COMPUTER VISION AND PATTERN RECOGNITION, 2005, vol. 2, 20 juin 2005 (2005-06-20), pages 157-162, XP010817513 IEEE, PISCATAWAY, NJ, USA ISBN: 978-0-7695-2372-9 | 11,12 | DOMAINES TECHNIQUES RECHERCHES (IPC) |
| A | * page 3 * ----- | 1-10, 13-18 | |

Le présent rapport a été établi pour toutes les revendications

| Lieu de la recherche | Date d'achèvement de la recherche | Examinateur |
|---|---|---|
| Munich | 28 septembre 2009 | Millet, Christophe |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

.......................................................................................

& : membre de la même famille, document correspondant

EPO FORM 1503 03.82 (P04C02)

# EP 2 141 656 A1

## RÉFÉRENCES CITÉES DANS LA DESCRIPTION

**Littérature non-brevet citée dans la description**

- **T. Rodriguez ; A. Cabo de Leon ; B. Uzzan ; N. Livet ; E. Boyer ; F. Geffray ; T. Balogh ; Z. Megyesi ; A. Barsi.** Holographic and action capture techniques. *SIGGRAPH '07, ACM SIGGRAPH 2007,* Août 2007